(19) Europäisches Patentamt
European Patent Office
Office européen des brevets

(11) **EP 4 668 558 A1**

(12) **EUROPEAN PATENT APPLICATION**

(43) Date of publication:
**24.12.2025 Bulletin 2025/52**

(21) Application number: **24182607.2**

(22) Date of filing: **17.06.2024**

(51) International Patent Classification (IPC):
**H02M 1/00** (2006.01)     **H02M 3/00** (2006.01)
**H02M 3/28** (2006.01)     **H02M 3/335** (2006.01)

(52) Cooperative Patent Classification (CPC):
**H02M 3/01; H02M 1/007; H02M 1/0077;
H02M 3/158; H02M 3/33576**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB Schweiz AG
5400 Baden (CH)**

(72) Inventors:
• **Boehler, Julian
  8006 Zürich (CH)**
• **Pettersson, Sami
  8953 Dietikon (CH)**
• **Canales, Francisco
  5405 Baden-Dättwil (CH)**
• **Rothmund, Daniel
  5243 Mülligen (CH)**

(74) Representative: **Sykora & König Patentanwälte
PartG mbB
Maximilianstraße 2
80539 München (DE)**

(54) **METHOD, CONTROLLER, AND COMPUTER PROGRAM FOR OPERATING A CONVERTER ARRANGEMENT, CONVERTER ARRANGEMENT, AND COMPUTER-READABLE MEDIUM**

(57) A method for operating a converter arrangement (20) is described. The converter arrangement (20) being configured for converting a first DC bus voltage into a second DC bus voltage and comprising a first electrical converter (22), a second electrical converter (24) being electrically arranged in parallel with the first electrical converter (22), and a first auxiliary voltage source (26) electrically arranged in series with the first electrical converter (22). The method comprises: receiving a first current value (I1) being representative of a first current through the first electrical converter (22); receiving a second current value (I2) being representative of a second current through the second electrical converter (24); determining a difference between the first and second current values (I1, I2); determining a first compensation voltage value (VC1) depending on the difference such that the first current corresponds to the second current when a first compensation voltage corresponding to the first compensation voltage (VC1) is added to the first DC bus voltage applied to the first electrical converter (22) or when the first compensation voltage is added to a first output voltage generated by the first electrical converter (22); and sending a first compensation signal to the first auxiliary voltage source (26), wherein the first auxiliary voltage source (26) is configured to add the first compensation voltage (VC1) to the first DC bus voltage applied to the first electrical converter (22) or, respectively, to the first output voltage generated by the first electrical converter (22) upon receiving the first compensation signal.

**FIG. 1**

**Description**

FIELD OF THE INVENTION

The invention relates to the field of electrical DC/DC converters. In particular, the invention relates to a method, a controller, and a computer program for operating a converter arrangement, to the converter arrangement, and to a computer-readable medium on which the computer program is stored.

BACKGROUND OF THE INVENTION

Electrical DC/DC converters are configured for converting a first DC voltage as an input voltage into a second DC voltage as an output voltage. The electrical converters may be coupled to an energy source, such as a battery or a photovoltaic panel, with the energy source providing the first DC voltage, and to a DC load, such as a DC motor, for example, to apply the second DC voltage to the load. For example, LLC resonant converter, in short "LLC converter", dual-active bridge converter, forward converter, and flyback converter are well-known and widely established converter topology used in different industrial applications.

Normally, LLC converters have an input stage with a full-bridge and an output stage with a full-bridge inductively coupled to each other by a transformer, e.g., a primary winding and a secondary winding. They may be turned on and off at zero voltage which may lead to low or even no switching losses and/or enable high switching frequencies. Further, LLCs may be operated with fixed modulation parameters and thereby in a simple way. LLC converters are usually controlled by adapting their switching frequency in order to guarantee a stabilized output voltage. In some applications however, a stabilized output voltage is not necessarily required. The LLC converter can then be operated open-loop with a fixed switching frequency slightly below a resonance frequency of the corresponding LLC converter, e.g., in a half-cycle discontinuous conduction mode, and provide a fixed ratio between the input voltage and the output voltage. This operating mode simplifies a converter operation since no closed-loop control is required and is often desirable since it enables fully soft-switched operation.

In order to increase an available output power, in particular an output current, of an electrical converter, e.g., the LLC converter, it is often desirable to parallel connect several identical converters. For example, several LLCs may be electrically arranged in parallel to increase the available total output current and thereby to increase the available total output power. However, if the electrical converters are operated in open-loop with fixed modulation parameters, the currents are distributed passively over the different paralleled LLCs and there is no possibility to influence a distribution of currents provided to the load between different paralleled LLC converters. The distribution of the currents is then solely determined by electric and/or thermal losses and by parasitic elements of the electrical converters, which may deviate significantly between different electrical converters. As a consequence, equal loading of the paralleled electrical converters cannot be guaranteed and large deviations may occur, thereby significantly reducing the available output power and/or overloading some of the paralleled electrical converters.

DESCRIPTION OF THE INVENTION

It is an objective of the present invention to provide a method, a controller, and a computer program for operating a converter arrangement, which enable to provide a high output power by the converter arrangement and/or to prevent an overloading of one or more electrical converters of the converter arrangement. It is another objective of the present invention to provide a computer-readable medium on which the computer program is stored.

It is a further objective of the present invention to provide a converter arrangement, which is able to provide a high output power and/or in which an overloading of one or more electrical converters of the converter arrangement is prevented or at least aggravated.

These objectives are achieved by the subject-matter of the independent claims. Further exemplary embodiments are evident from the dependent claims and the following description.

A first aspect relates to a method for operating a converter arrangement. The converter arrangement is configured for converting a first DC bus voltage into a second DC bus voltage and comprises a first electrical converter, a second electrical converter being electrically arranged in parallel to the first electrical converter, and a first auxiliary voltage source electrically arranged in series with the first electrical converter. The method comprises: receiving a first current value being representative of a first current through the first electrical converter; receiving a second current value being representative of a second current through the second electrical converter; determining a difference between the first and second current values; determining a first compensation voltage value depending on the difference such that the first current corresponds to the second current when a first compensation voltage corresponding to the first compensation voltage value is added to the first DC bus voltage applied to the first electrical converter or when the first compensation voltage is added to a first output voltage generated by the first electrical converter; and sending a first compensation signal to the first auxiliary voltage source, wherein the first auxiliary voltage source is configured to add the first compensation voltage to the first DC bus voltage applied to the first electrical converter or, respectively, to the first output voltage generated by the first electrical converter upon receiving the first compensation signal.

A second aspect relates to a controller for operating the converter arrangement. The controller comprises: a memory for storing one or more current values and/or one or more voltage values; and a processor communicatively coupled to the memory and being configured for carrying out the method as described above and in the following based on the one or more current values and/or one or more voltage values, respectively. The one or more current values may be at least one of the first current value, the second current value, and the difference between the first and second current values. The one or more voltage values may be at least one of the first compensation voltage value, a second compensation voltage value, a compensation voltage reference value, a bias voltage value, and a sum of the compensation voltage value and the bias voltage value.

A third aspect relates to the converter arrangement for converting the first DC bus voltage into the second DC bus voltage. The converter arrangement comprises: an input connection for electrically coupling the converter arrangement to an energy source, wherein the energy source is configured for providing the first DC bus voltage; an output connection for electrically coupling the converter arrangement to a load, wherein the load is configured for receiving the second DC bus voltage; the first electrical converter electrically coupled in between the input connection and the output connection and being configured for receiving the first DC bus voltage, for converting the first DC bus voltage into the second DC bus voltage and for applying the second DC bus voltage to the output connection; the second electrical converter electrically coupled in between the input connection and the output connection such that the first electrical converter and the second electrical converter are electrically arranged in parallel between the input connection and the output connection, wherein the second electrical converter is configured for receiving the first DC bus voltage, for converting the first DC bus voltage into the second DC bus voltage and for applying the second DC bus voltage to the output connection; and the first auxiliary voltage source electrically coupled in series between the first electrical converter and the input connection or between the first electrical converter and the output connection, with the first auxiliary voltage source being configured for adding the first compensation voltage to the first DC bus voltage applied to the first electrical converter or, respectively, to a first output voltage generated by the first electrical converter, wherein the first compensation voltage is generated such that the first current through the first electrical converter corresponds to the second current through the second electrical converter.

The converter arrangement may comprise three or more, e.g., N, electrical converters being electrically arranged in parallel between the input connection and the output connection, with N being a natural number. In this case, the converter arrangement may comprise at least N-1 auxiliary voltage sources, wherein each of these auxiliary voltage sources is electrically arranged in series with a corresponding one of the electrical converters. Further, in this case, the auxiliary voltage sources have to be configured as a bipolar voltage sources being able to add positive or negative voltages to the corresponding compensation voltage. Alternatively, N auxiliary voltage sources may be provided for the N electrical converters such that each electrical converter is electrically coupled in series with a corresponding one of the N auxiliary voltage sources. In this case, all of the auxiliary voltage sources may be unipolar voltage sources.

A fourth aspect relates to a computer program for operating the converter arrangement as described above and in the following. The computer program comprises computer-readable instructions which, when being executed by a processor of the controller, carry out the method as described above and in the following.

A fifth aspect relates to a computer-readable medium on which the computer program is stored. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

It has to be understood that some features of the present invention are described with respect to one of the aspects only for conciseness reasons and to avoid unnecessary repetitions, but that these features may be easily transferred to one or more of the other aspects by the person skilled in the art.

The above aspects, in particular the auxiliary voltage source(s) electrically coupled in series with the corresponding electrical converter(s), enable to compensate current imbalances between different paralleled electrical converters. This contributes to an equal load sharing between all parallel connected electrical converters. In particular, the currents and the power can be equally distributed over all electrical converters of the converter arrangement. This enables to provide a high output power by the converter arrangement and/or to prevent an overloading of one or more electrical converters of the converter arrangement. In many cases, the first and in case any further compensation voltage(s) can be kept relatively low compared to the total input voltage of the converter arrangement, i.e., the first DC bus voltage, when the auxiliary voltage sources are coupled to the input connection, and can be kept relatively low compared to the total output voltage of the converter arrangement, i.e., the second DC bus voltage, when the auxiliary voltage sources are coupled to the output connection. For example, the corresponding compensation voltage may be approximately 1% to 10%, e.g., 1% to 5%, of the second DC bus voltage. For example, in many applications compensation voltages in a range from 1 V to 50 V, e.g. 10 V to 20 V, may be sufficient to equally distribute the currents over all electrical converters of the converter arrangement. This enables to use a low power auxiliary voltage source for generating the corresponding compensation voltage. This enables to keep the overall complexity and/or a weight and/or a size of the of the converter arrangement low.

The energy source is configured for providing the first DC bus voltage. The load is configured for receiving the second DC bus voltage. That the electrical converters are arranged electrically in parallel may mean that input terminals of the electrical converters are electrically coupled to the input connection and that output terminals of the electrical converters are electrically coupled to the output connection. That the first auxiliary voltage source is electrically arranged in series with the first electrical converter may mean that the first auxiliary voltage source is electrically arranged in series between the input terminal of the first electrical converter and the input connection of the converter arrangement or between the output terminal of the first electrical converter and the output connection of the converter arrangement. The auxiliary voltage source simply may be embodied as a power converter. The auxiliary voltage source may be configured as or may be referred to as buck converter, boost converter, or flyback converter, for example.

The first and second electrical converters each are configured for generating the second DC bus voltage. However, in the reality, the first output voltage generated by the first electrical converter and a second output voltage generated by the second electrical converter may differ from the second DC bus voltage to be generated by the corresponding electrical converter. So, the second DC bus voltage may be interpreted as an actual total output voltage generated by the converter arrangement, whereas the first and second output voltages may be interpreted as actual output voltages of the corresponding electrical converters.

The first compensation signal may be used to control one or more semiconductor switches of the first auxiliary voltage source. To this end, the first compensation signal may comprise gate pulses for controlling one or more semiconductor switches of the first auxiliary voltage source. The first compensation signal may be generated depending on the first compensation voltage value, e.g., by Pulse Width Modulation (PWM).

According to an embodiment, the first compensation voltage is determined depending on the difference between the first and second current values by determining a first compensation voltage reference value depending on the difference and by adding a predetermined bias voltage value to the first compensation voltage reference value. In this case, the first compensation voltage value may correspond to the sum of the first compensation voltage reference value and the bias voltage value, at least as long as no other modifications of the sum are carried out.

According to an embodiment, the first compensation voltage value is determined depending on a predetermined feedback gain value and depending on the difference between the first and second current values by determining the first compensation voltage reference value depending on the difference and by modifying the determined first compensation voltage reference value by the predetermined feedback gain value. In this case, the first compensation voltage value may correspond to the modified first compensation voltage reference value, at least as long as no other modifications of the modified first compensation voltage reference value are carried out. The determined first compensation voltage reference value may be modified by the predetermined feedback gain value, by measuring a first capacitor current in a first auxiliary capacitor of the first auxiliary voltage source to get a corresponding first capacitor current value, by multiplying the first capacitor current value by the predetermined feedback gain, and by subtracting the resulting product from the first compensation voltage reference value.

According to an embodiment, the first compensation voltage value is determined depending on the difference between the first and second current values by determining the first compensation voltage reference value depending on the difference, by adding the predetermined bias voltage value to the first compensation voltage reference value, and by modifying the resulting sum by the predetermined feedback gain value. In this case, the first compensation voltage value corresponds to the modified sum of the first compensation voltage reference value and the bias voltage value. The sum of the first compensation voltage reference value and the bias voltage value may be modified by the predetermined feedback gain value, by measuring the first capacitor current in the first auxiliary capacitor to get the corresponding first capacitor current value, by multiplying the first capacitor current value by the predetermined feedback gain, and by subtracting the resulting product from the sum of the first compensation voltage reference value and the bias voltage value.

According to an embodiment, the converter arrangement comprises a second auxiliary voltage source electrically arranged in series with the second electrical converter, and the method comprises: determining a second compensation voltage value depending on the difference between the first and second current values such that the first current corresponds to the second current when a second compensation voltage corresponding to the second compensation voltage value is added to the first DC bus voltage applied to the second electrical converter or when the second compensation voltage is added to the second output voltage generated by the second electrical converter; and sending a second compensation signal to the second auxiliary voltage source, wherein the second auxiliary voltage source is configured to add the second compensation voltage to the first DC bus voltage applied to the second electrical converter or, respectively, to the second output voltage generated by the second electrical converter upon receiving the second compensation signal. That the second auxiliary voltage source is electrically arranged in series with the second electrical converter may mean that the second auxiliary voltage source is electrically arranged in series between an input terminal of the second electrical converter and the input connection of the converter arrangement or between an output terminal of the second electrical converter and the output connection of the converter arrangement. The second compensation signal may be used to control one or more semiconductor switches of the second auxiliary voltage source. To this end, the second compensation signal may comprise gate pulses for controlling one or more semiconductor switches of the second auxiliary voltage source. The second compensation signal may be generated depending on the second compensation voltage value, e.g., by Pulse Width Modulation (PWM).

According to an embodiment, the method comprises: receiving a second DC bus voltage value corresponding to an actual second DC bus voltage actually generated by the converter arrangement; determining a difference between the second DC bus voltage value and a second DC bus voltage reference value, wherein the second DC bus voltage reference value corresponds to the second DC bus voltage to be generated by the converter arrangement; and controlling the first auxiliary voltage source and the second auxiliary voltage source depending on the difference between the second DC bus voltage value and the second DC bus voltage reference value such that the actual second DC bus voltage corresponds to the second DC bus voltage reference value. The first auxiliary voltage source and the second auxiliary voltage source may be controlled depending on the difference between the second DC bus voltage value and the second DC bus voltage reference value such that the actual second DC bus voltage corresponds to the second DC bus voltage reference value by determining first and second control signals depending on the difference between the second DC bus voltage value and the second DC bus voltage reference value and by sending the first control signal to the first auxiliary voltage source and by sending the second control signal to the second auxiliary voltage source in addition to the corresponding compensation signals. The first and second control signals may be determined depending on the difference between the second DC bus voltage value and the second DC bus voltage reference value by PWM, for example.

According to an embodiment, a first auxiliary winding of the first auxiliary voltage source is inductively coupled to a coupling inductance of the first electrical converter for receiving energy from the first electrical converter for providing the first compensation voltage. In this case, the first electrical converter serves as an energy source for providing energy to the first auxiliary voltage source. This energy enables the first auxiliary voltage source to provide the first compensation voltage. Alternatively, a dedicated energy source may be provided and may be electrically coupled to the first auxiliary voltage source for providing the energy to the first auxiliary voltage source.

According to an embodiment, the converter arrangement comprises: the second auxiliary voltage source electrically coupled in series between the second electrical converter and the input connection or between the second electrical converter and the output connection, with the second auxiliary voltage source being configured for adding the second compensation voltage to the first DC bus voltage applied to the second electrical converter or, respectively, to the second output voltage generated by the second electrical converter, wherein the second compensation voltage is determined such that the first current through the first electrical converter corresponds to the second current through the second electrical converter.

These and other aspects of the invention will be apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig. 1 shows a circuit diagram of a converter arrangement, in accordance with an embodiment of the present invention.

Fig. 2 shows a circuit diagram of a converter arrangement and of a controller for controlling the converter arrangement, in accordance with an embodiment of the present invention.

Fig. 3 shows a circuit diagram of a converter arrangement and of a controller for controlling the converter arrangement, in accordance with an embodiment of the present invention.

Fig. 4 shows a circuit diagram of a converter arrangement and of a controller for controlling the converter arrangement, in accordance with an embodiment of the present invention.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

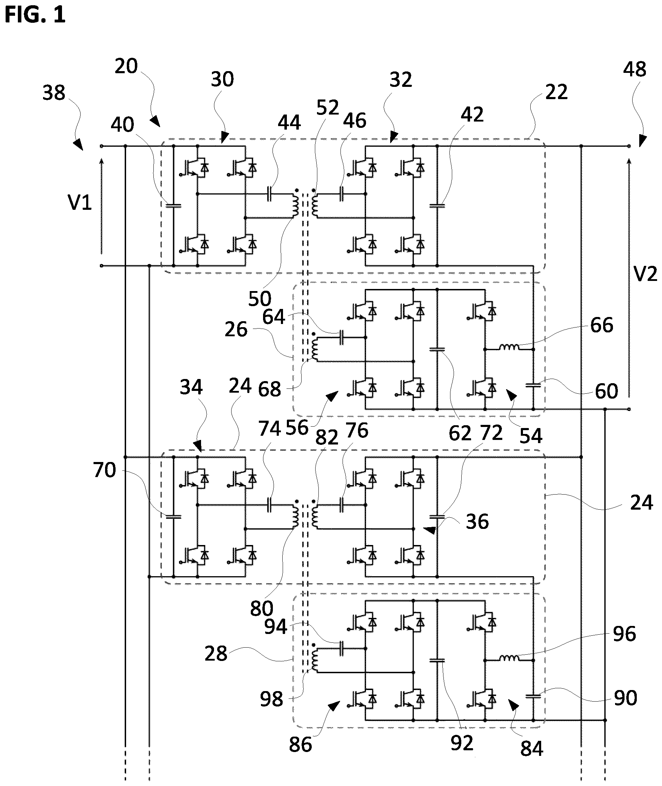

Fig. 1 shows a circuit diagram of a converter arrangement 20, in accordance with an embodiment of the present invention. The converter arrangement 20 is configured for converting a first DC bus voltage into a second DC bus voltage.

The first DC bus voltage may be an input voltage of the converter arrangement 20 and the second DC bus voltage may be a total output voltage of the converter arrangement 20.

The converter arrangement 20 comprises an input connection 38, an output connection 48, a first electrical converter 22, at least a second electrical converter 24, and at least one auxiliary voltage source, e.g. a first auxiliary voltage source 26 and a second auxiliary voltage source 28. The electrical converters 22, 24 may be of the same type or may be of different types. For example, each of the electrical converters 22, 24 may be an LLC resonant converter, in short an "LLC converter". However, other converter topologies may also be used, e.g., dual-active bridge converters, forward converters, or flyback converters. The auxiliary voltage sources 26, 28 each may be a buck converter, for example.

The input connection 38 is configured for electrically coupling the converter arrangement 20 to an energy source (not shown). The energy source may be configured for providing the first DC bus voltage to the converter arrangement 20 via the input connection 38. The energy source may be a battery or a photovoltaic panel. An input terminal of the first electrical converter 22 and an input terminal of the second electrical converter 24 are electrically coupled to the input connection 38. The first DC bus voltage corresponds to a first DC bus voltage value V1, which may be measured at the input connection 38.

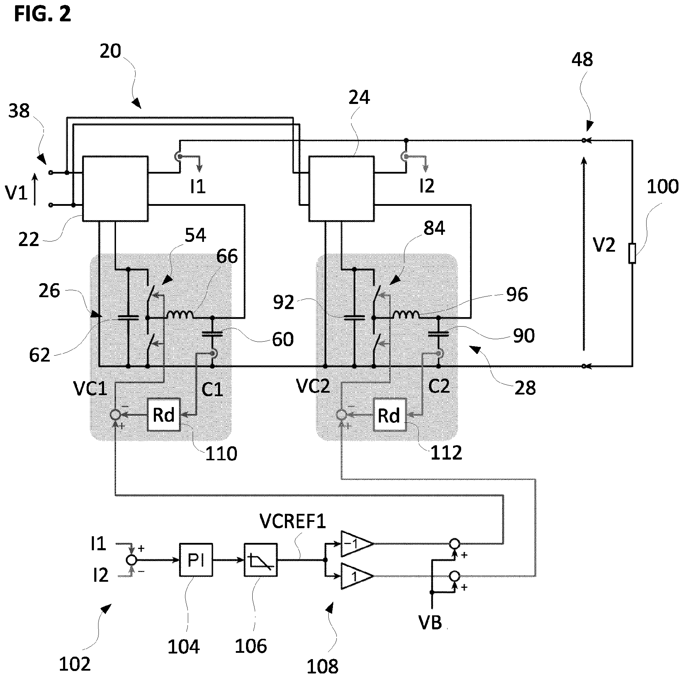

The output connection 48 is configured for electrically coupling the converter arrangement 20 to a load 100 (see figure 2). The load 100 may be configured for receiving the second DC bus voltage. The load 100 may be a DC load, such as a DC motor, for example. An output terminal of the first electrical converter 22 and an output terminal of the second electrical converter 24 are electrically coupled to the output connection 48, wherein one pole of the first electrical converter 22 and one pole of the second electrical converter 24 are directly coupled to the output connection 48, whereas the other pole of the first electrical converter 22 and, in case of the second auxiliary voltage source 28 being arranged, the other pole of the second electrical converter 24 are indirectly coupled to the output connection 48 via the first auxiliary voltage source 26 and, respectively, the second auxiliary voltage source 28. The second DC bus voltage corresponds to a second DC bus voltage value V2, which may be measured at the output connection 48, e.g., by a voltmeter (not shown) electrically coupled to the output connection 48.

The first electrical converter 22 is electrically coupled in between the input connection 38 and the output connection 48. The first electrical converter 22 is configured for receiving the first DC bus voltage, for converting the first DC bus voltage into the second DC bus voltage and for providing the second DC bus voltage to the output connection 48. However, an actual first output voltage of the first electrical converter 22 may differ from the second DC bus voltage to be achieved by the first electrical converter 22. The first electrical converter 22 may have an input stage electrically coupled to the input connection 38. The input stage of the first electrical converter 22 may be embodied by a first semiconductor arrangement 30 and a first converter capacitor 40. The first semiconductor arrangement 30 may comprise one or more, e.g., four, semiconductor switches. The first converter capacitor 40 may represent an input DC link of the first electrical converter 22. The first electrical converter 22 may have a coupling stage electrically coupled to an output stage of the first electrical converter 22. The coupling stage of the first electrical converter 22 may have a first coupling capacitor 44, a second coupling capacitor 46, a first coupling inductance 50, and a second coupling inductance 52. The first coupling capacitor 44 may be electrically arranged in series with the first coupling inductance 50. The first coupling capacitor 44 and the first coupling inductance 50 may be electrically coupled to the first semiconductor arrangement 30. The first coupling inductance 50 may be inductively coupled to the second coupling inductance 52. The second coupling capacitor 46 may be electrically arranged in series with the second coupling inductance 52. The output stage of the first electrical converter 22 may be embodied by a second semiconductor arrangement 32 and a second converter capacitor 42. The second coupling capacitor 46 and the second coupling inductance 52 may be electrically coupled to the second semiconductor arrangement 32. The second semiconductor arrangement 32 may comprise one or more, e.g., four, semiconductor switches. The second converter capacitor 42 may represent an output DC link of the first electrical converter 22. The first coupling inductance 50 and the second coupling inductance 52 each may comprise a coil and/or winding.

The second electrical converter 24 is electrically coupled in between the input connection 38 and the output connection 48 such that the first electrical converter 22 and the second electrical converter 24 are electrically arranged in parallel between the input connection 38 and the output connection 48. The second electrical converter 24 is configured for receiving the first DC bus voltage, for converting the first DC bus voltage into the second DC bus voltage and for providing the second DC bus voltage to the output connection 48. However, an actual second output voltage of the second electrical converter 24 may differ from the second DC bus voltage to be achieved by the second electrical converter 24. The second electrical converter 24 may have an input stage electrically coupled to the input connection 38. The input stage of the second electrical converter 24 may be embodied by a third semiconductor arrangement 34 and a third converter capacitor 70. The third semiconductor arrangement 34 may comprise one or more, e.g., four, semiconductor switches. The third converter capacitor 70 may represent an input DC link of the second electrical converter 24. The second electrical converter 24 may have a coupling stage electrically coupled to an output stage of the second electrical converter 24. The coupling stage of the second electrical converter 24 may have a third coupling capacitor 74, a fourth coupling capacitor 76, a third coupling inductance 80, and a fourth coupling inductance 82. The third coupling capacitor 74 may be electrically arranged in series with the third coupling inductance 80. The third coupling capacitor 74 and the third coupling inductance 80 may be electrically coupled to the third semiconductor arrangement 34. The third coupling inductance 80 may be inductively coupled to the fourth coupling inductance 82. The fourth coupling capacitor 76 may be electrically arranged in series with the fourth coupling inductance 82. The output stage of the second electrical converter 24 may be embodied by a fourth semiconductor arrangement 36 and a fourth converter capacitor 72. The fourth coupling capacitor 76 and the fourth coupling inductance 82 may be electrically coupled to the fourth semiconductor arrangement 36. The fourth semiconductor arrangement 36 may comprise one or more, e.g., four, semiconductor switches. The fourth converter capacitor 72 may represent an output DC link of the second electrical converter 24. The third coupling inductance 80 and the fourth coupling inductance 82 each may comprise a coil and/or winding.

That the electrical converters 22, 24 are arranged electrically in parallel may mean that input terminals of the electrical converters 22, 24 are electrically coupled to the input connection 38 and that output terminals of the electrical converters 22, 24 are electrically coupled to the output connection 48.

The first auxiliary voltage source 26 is electrically coupled in series between the first electrical converter 22 and the output connection 48. The first auxiliary voltage source 26 may be configured for adding a first compensation voltage to the first output voltage actually generated by the first electrical converter 22. The first output voltage actually generated by the first electrical converter 22 may be referred to as first output voltage and as such may correspond to the actual first output voltage mentioned above. The first compensation voltage is generated such that a first current through the first electrical converter 22 corresponds to a second current through the second electrical converter 24. That the first auxiliary voltage source 26 is electrically arranged in series with the first electrical converter 22 may mean that the first auxiliary voltage source 26 is electrically arranged in series between the output terminal of the first electrical converter 22 and the output connection 48 of the converter arrangement 20.

The first auxiliary voltage source 26 may have a fifth semiconductor arrangement 54, a sixth semiconductor arrangement 56, a first auxiliary capacitor 60, a second auxiliary capacitor 62, a third auxiliary capacitor 64, a first auxiliary inductance 66, and a first auxiliary winding 68. The first auxiliary inductance 66 and the first auxiliary winding 68 each may comprise a coil and/or winding. The first auxiliary voltage source 26 may be coupled to the first electrical converter 22 via the first auxiliary winding 68 and the first coupling inductance 50. In particular, the first auxiliary winding 68 may be inductively coupled to the first coupling inductance 50. In this way, the first auxiliary voltage source 26 may receive energy from the first electrical converter 22 to be able to add the first compensation voltage to the first output voltage actually generated by the first electrical converter 22. Alternatively, a dedicated energy source (not shown) may be provided and may be electrically coupled to the first auxiliary voltage source 26 for providing the energy to the first auxiliary voltage source 26. The third auxiliary capacitor 64 may be electrically arranged in series with the first auxiliary winding 68. An input stage of the first auxiliary voltage source 26 may be embodied by a sixth semiconductor arrangement 56. The third auxiliary capacitor 64 and the first auxiliary winding 68 may be electrically coupled to the sixth semiconductor arrangement 56. The sixth semiconductor arrangement 56 may comprise one or more, e.g., four, semiconductor switches. The second auxiliary capacitor 62 may represent a DC link of the first auxiliary voltage source 26. The input stage of the first auxiliary voltage source 26 is electrically coupled to the DC link of the first auxiliary voltage source 26. The DC link of the first auxiliary voltage source 26 is electrically coupled to an output stage of the first auxiliary voltage source 26. The output stage of the first auxiliary voltage source 26 may be embodied by a fifth semiconductor arrangement 54, the first auxiliary inductance 66, and the first auxiliary capacitor 60. The fifth semiconductor arrangement 54 may comprise one or more semiconductor switches. The output stage of the first auxiliary voltage source 26 is electrically coupled the output terminal of the first electrical converter 22 and to the output connection 48.

The second auxiliary voltage source 28 may be electrically coupled in series between the second electrical converter 24 and the output connection 48. The second auxiliary voltage source 28 may be configured for adding a second compensation voltage to the second output voltage actually generated by the second electrical converter 24. The second output voltage actually generated by the second electrical converter 24 may be referred to as second output voltage and as such may correspond to the actual second output voltage mentioned above. The second compensation voltage is determined such that the first current through the first electrical converter 22 corresponds to the second current through the second electrical converter 24. That the second auxiliary voltage source 28 is electrically arranged in series with the second electrical converter 24 may mean that the second auxiliary voltage source 28 is electrically arranged in series between the output terminal of the second electrical converter 24 and the output connection 48 of the converter arrangement 20.

The second auxiliary voltage source 28 may have a seventh semiconductor arrangement 84, an eighth semiconductor arrangement 86, a fourth auxiliary capacitor 90, a fifth auxiliary capacitor 92, a sixth auxiliary capacitor 94, a second auxiliary inductance 96, and a second auxiliary winding 98. The second auxiliary inductance 96 and the second auxiliary winding 98 each may comprise a coil and/or winding. The second auxiliary voltage source 28 may be coupled to the second electrical converter 24 via the second auxiliary winding 98 and the third coupling inductance 80. In particular, the second auxiliary winding 98 may be inductively coupled to the third coupling inductance 80. In this way, the second auxiliary voltage source 28 may receive energy from the second electrical converter 24 to be able to add the second compensation voltage to the second output voltage actually generated by the second electrical converter 24.

Alternatively, a dedicated energy source (not shown) may be provided and may be electrically coupled to the second auxiliary voltage source 28 for providing the energy to the second auxiliary voltage source 28. The sixth auxiliary capacitor 94 may be electrically arranged in series with the second auxiliary winding 98. An input stage of the second auxiliary voltage source 28 may be embodied by an eighth semiconductor arrangement 86. The sixth auxiliary capacitor 94 and the second auxiliary winding 98 may be electrically coupled to the eighth semiconductor arrangement 86. The eighth semiconductor arrangement 86 may comprise one or more, e.g., four, semiconductor switches. The fifth auxiliary capacitor 92 may represent a DC link of the second auxiliary voltage source 28. The input stage of the second auxiliary voltage source 28 is electrically coupled to the DC link of the second auxiliary voltage source 28. The DC link of the second auxiliary voltage source 28 is electrically coupled to an output stage of the second auxiliary voltage source 28. The output stage of the second auxiliary voltage source 28 may be embodied by a seventh semiconductor arrangement 84, the second auxiliary inductance 96, and the fourth auxiliary capacitor 90. The seventh semiconductor arrangement 84 may comprise one or more semiconductor switches. The output stage of the second auxiliary voltage source 28 is electrically coupled the output terminal of the second electrical converter 24 and to the output connection 48.

The first and second auxiliary voltage sources 26, 28 each may be a unipolar voltage source. If the converter arrangement 20 comprises the two electrical converters 22, 24 only, the first or second auxiliary voltage source 26, 28 may be omitted. In this case, the other remaining auxiliary voltage source 26, 28 may be a bipolar voltage source.

In general, the converter arrangement 20 may comprise three or more, e.g., N, electrical converters 22, 24 being electrically arranged in parallel between the input connection 38 and the output connection 48, with N being a natural number. In this case, the converter arrangement 20 may comprise at least N-1 of the auxiliary voltage sources 26, 28, wherein each of these auxiliary voltage sources 26, 28 is electrically arranged in series with a corresponding one of the electrical converters 22, 24. Further, in this case, the auxiliary voltage sources have to be configured as a bipolar voltage sources being able to add positive or negative compensation voltages to the corresponding output voltage. Alternatively, N auxiliary voltage sources 26, 28 may be provided for the N electrical converters 22, 24 such that each electrical converter 22, 24is electrically coupled in series with a corresponding one of the N auxiliary voltage sources 26, 28. In this case, all of the auxiliary voltage sources 26, 28 may be unipolar voltage sources. Another alternative would be to keep all N auxiliary voltage sources 26, 28 but to control them such that the auxiliary voltage source 26, 28 with the lowest or the highest reference value is not actively switching, i.e., the auxiliary voltage source with the lowest or the highest reference, in other words setpoint, always has a duty cycle of zero and therefore generates no switching losses.

In the embodiment shown in figure 1 and described in the foregoing, which may be referred to as first embodiment in the following, the first DC bus voltage which represents the total input voltage of the converter arrangement 20 is applied to that side of the electrical converters 22, 24 at which the corresponding auxiliary voltage sources 26, 28 are not arranged, whereas the second DC bus voltage which represents the total output voltage of the converter arrangement 20 is generated at that side of the electrical converters 22, 24 at which the corresponding auxiliary voltage sources 26, 28 are arranged. So, the auxiliary voltage sources 26, 28 are arranged between the output terminals of the corresponding electrical converters 22, 24 and the output connection 48. As described above, in this first embodiment, the auxiliary voltage sources 26, 28 are configured such that they are able to add the corresponding compensation voltage to the to the output voltage generated by the corresponding electrical converter 22, 24.

However, in an alternative embodiment which is not shown in the figures and which may be referred to as second embodiment in the following, the first DC bus voltage may be applied to that side of the electrical converters 22, 24 at which the corresponding auxiliary voltage sources 26, 28 are arranged, whereas the second DC bus voltage is generated at that side of the electrical converters 22, 24 at which the corresponding auxiliary voltage sources 26, 28 are not arranged. In this second embodiment, the structure of the converter arrangement 20 may correspond to the structure of the converter arrangement 20 shown in figure 1, wherein only the sides to which the total input voltage is applied and at which the total output voltage is generated are switched. So, in the second embodiment in figure 1 the input connection 38 and the output connection 48 would be interconverted such that the auxiliary voltage sources 26, 28 would be arranged between the input terminals of the corresponding electrical converters 22, 24 and the input connection 38. Further, in this alternative embodiment, the auxiliary voltage sources 26, 28 are configured such that they are able to add the corresponding compensation voltage to the first DC bus voltage applied to the corresponding electrical converter 22, 24.

Fig. 2 shows a circuit diagram of a converter arrangement 20 and of a controller 102 for controlling the converter arrangement 20, in accordance with an embodiment of the present invention. The converter arrangement 20 may widely or completely correspond to the converter arrangement 20 described with respect to figure 1, in particular to the embodiment described with respect to figure 1 first. In this context, it has to be mentioned that in figure 2 the sixth semiconductor arrangement 56, the third auxiliary capacitor 64, and the first auxiliary winding 68 of the first auxiliary voltage source 26, and the eighth semiconductor arrangement 86, the sixth auxiliary capacitor 94, and the second auxiliary winding 98 of the second auxiliary voltage source 28 are not missing or omitted but are only depicted as being integrated in the first electrical converter 22 and, respectively the second electrical converter 24. In fact, these entities embody the energy sources of the corresponding auxiliary voltage sources 26, 28 and may be integrated in the corresponding electrical converters 22, 24 in the reality. Therefore, only those features of the converter arrangement 20 shown in figure 2 are explained in the following, in which the converter arrangement 20 shown in figure 2 differs from the converter arrangement 20 explained with respect to figure 1. In addition, the controller 102 and the method for controlling the converter arrangement 20 carried out by the controller 102 are described in the following.

The controller 102 may receive a first current value I1 being representative of the first current through the first electrical converter 22. The first current value I1 may be generated by a current sensor (not shown) measuring the first current at the output terminal of the first electrical converter 22. Then, the first current value I1 may be transferred to the controller 102.

The controller 102 may receive a second current value I2 being representative of the second current through the second electrical converter 24. The second current value I2 may be generated by another current sensor (not shown) measuring the second current at the output terminal of the second electrical converter 24. Then, the second current value I2 may be transferred to the controller 102. The controller 102 may receive the first and second current values I1, I2 simultaneously or one after the other.

Then, the controller 10 may determine a difference between the first and second current values I1, I2. In particular, the controller 102 may subtract the second current value I2 from the first current value I1 to determine the difference. The difference between the first and second current values I1, I2 may be further processed by a first PI controller 104.

Then, the controller 102 may determine a first compensation voltage value VC1 depending on the difference between the first and second current values I1, I2 such that the first current corresponds to the second current when the first compensation voltage corresponding to the first compensation value VC1 is added to the first output voltage generated by the first electrical converter 22.

The first compensation voltage value VC1 may be determined depending on the difference between the first and second current values I1, I2 by determining a first compensation voltage reference value VCREF1 depending on the difference and by adding a predetermined bias voltage value VB to the first compensation voltage reference value VCREF1, wherein the first compensation voltage value VC1 may correspond to the sum of the first compensation voltage reference value VCREF1 and the bias voltage value VB. The bias voltage value VB may correspond to a half of a DC link voltage resulting over the auxiliary capacitor 62, 92 of the DC link of the corresponding auxiliary voltage source 26, 28 in order to achieve a symmetrical control of the corresponding auxiliary voltage source 26, 28 around a centre of its voltage range. This may be done to avoid a saturation in case of negative compensation voltages, for example.

Alternatively, the first compensation voltage value VC1 may be determined depending on the difference between the first and second current values I1, I2 by determining the first compensation voltage reference value VCREF1 depending on the difference and by modifying the determined first compensation voltage reference value VCREF1 by a predetermined feedback gain value Rd. In this case, the first compensation voltage value VC1 may correspond to the modified first compensation voltage reference value VCREF1. In order to modify the first compensation voltage reference value VCREF1 by the predetermined feedback gain value Rd, a first capacitor current value C1 being representative of a first capacitor current through, in other words "in", the first auxiliary capacitor 60 may be measured, e.g, by a dedicated current sensor (not shown), and the first capacitor current value C1 may be multiplied by the predetermined feedback gain value Rd, e.g., by a first gain block 110. Then, the result of this multiplication may be subtracted from the first compensation voltage reference value VCREF 1.

Alternatively, the first compensation voltage value VC1 may be determined depending on the difference between the first and second current values I1, I2 by determining the first compensation voltage reference value VCREF1 from the difference between the first and second current values I1, I2, by adding the predetermined bias voltage VB to the first compensation voltage reference value VCREF1, and by modifying the sum of the first compensation voltage reference value VCREF1 and the bias voltage VB by the predetermined feedback gain value Rd, as described above with respect to the modification of the first compensation voltage reference value VCREF1 only. In this case, the first compensation voltage value VC1 corresponds to the correspondingly modified sum of the first compensation voltage reference value VCREF1 and the bias voltage VB.

Modifying the first compensation voltage reference value VCREF 1 or the sum of the first compensation voltage reference value VCREF1 and the bias voltage VB by the predetermined feedback gain value Rd may represent a virtual resistance damping which may be used to damp a resonance of an LC output filter of the first auxiliary voltage source 26, i.e., of the first auxiliary capacitor 60 and the first auxiliary inductance 66. This virtual resistance damping is well-known in the art for a wide variety of electrical converters and is also referred to as active damping.

The first compensation voltage reference value VCREF1 may be determined from the output of the first PI controller 104, e.g. by the lowpass filter 106. Before modifying the first compensation voltage reference value VCREF1 by the bias voltage value VB and/or by the predetermined feedback gain value Rd, the first compensation voltage reference value VCREF1 may be forwarded via the two different paths, e.g., by the splitting stage 108, wherein in one of these paths the sign of the first compensation voltage reference value VCREF 1 may be changed. Instead of the active damping by the predetermined feedback gain value Rd, other control structures for the auxiliary voltage sources 26, 28 may be used, e.g., controlling an inductor current of the corresponding auxiliary voltage sources 26, 28 with an inner current controller or control methods based on measuring a capacitor output voltage of the corresponding auxiliary voltage source 26, 28, e.g., by a known LQR control.

When the converter arrangement 20 comprises the second auxiliary voltage source 28 electrically arranged in series with the second electrical converter 24, the controller 102 may determine a second compensation voltage value VC2 depending on the difference between the first and second current values I1, I2 such that the first current corresponds to the second current when the second compensation voltage corresponding to the second compensation voltage value VC2 is added to the second output voltage generated by the second electrical converter 24. The second compensation voltage value VC2 may be determined in a similar way as the first compensation voltage value VC1 explained above, e.g., by determining the first compensation voltage reference value VCREF1, by adding the bias voltage value VB to the first compensation voltage reference value VCREF1, and/or by modifying the first compensation voltage reference value VCREF 1 or the sum of the first compensation voltage reference value VCREF1 and the bias voltage value VB by the predetermined feedback gain, wherein the first compensation voltage reference value VCREF1 may be forwarded to the auxiliary converters 26, 28 by the splitting stage 108 such that the sign of the first compensation voltage reference value VCREF1 in one of the paths is different from the sign of the first compensation voltage reference value VCREF1 in the other path. In this embodiment, the virtual resistance damping may be used also to damp a resonance of an LC output filter of the second auxiliary voltage source 28, i.e., of the fourth auxiliary capacitor 90 and the second auxiliary inductance 96.

Then, the controller 102 may generate and may send a first compensation signal to the first auxiliary voltage source 26, wherein the first auxiliary voltage source 26 is configured to add the first compensation voltage corresponding to the first compensation voltage value VC1 to the first output voltage generated by the first electrical converter 22 upon receiving the first compensation signal. In case of the second auxiliary voltage source 28 being present, the controller 102 may generate and send a second compensation signal to the second auxiliary voltage source 28, wherein the second auxiliary voltage source 28 is configured to add the second compensation voltage to the second output voltage generated by the second electrical converter 24 upon receiving the second compensation signal. The first compensation signal may be generated depending on the first compensation voltage value VC1, e.g., by a first modulator (not shown) of the controller 102, e.g., by a first PWM-modulator, as it is known in the art. The second compensation signal may be generated depending on the second compensation voltage value VC2, e.g., by a second modulator (not shown) of the controller 102, e.g., by a second PWM-modulator, as it is known in the art.

The first compensation signal may be used to control one or more semiconductor switches of the first auxiliary voltage source 26, in particular the semiconductor switches of the fifth semiconductor arrangement 54. The second compensation signal may be used to control one or more semiconductor switches of the second auxiliary voltage source 28, in particular of the semiconductor switches of the seventh semiconductor arrangement 84.

So, the controller 102 is configured for operating the converter arrangement 20. To this end, the controller 102 comprises a memory (not shown) for storing one or more current values and/or one or more voltage values and a processor (not shown) communicatively coupled to the memory and being configured for carrying out the method as described in the foregoing based on the one or more current values and/or one or more voltage values, respectively. The one or more current values may be at least one of the first current value I1, the second current value I2, and the difference between the first and second current values I1, I2. The one or more voltage values may be at least one of the first compensation voltage value VC1, the second compensation voltage value VC2, the first compensation voltage reference value VCREF1, the bias voltage value VB, and the sum of the first compensation voltage reference value VCREF1 and the bias voltage value VB. The controller 102 may carry out a computer program for operating the converter arrangement 20. The computer program may comprise computer-readable instructions which, when being executed by the processor of the controller 102, carry out the control method as described in the foregoing. The computer program may be stored on a computer-readable medium, e.g., on a memory of the controller 102.

The controller 102 shown in figure 2 and its function are described with respect to the first embodiment of the converter arrangement 20 described with respect to figure 1. As described above, in this first embodiment of the converter arrangement 20, the total output voltage is generated at that side of the converter arrangement 20 in which the auxiliary converters 26, 28 are arranged, i.e., the right side of figure 1, and the compensation voltages are added to the output voltages of the electrical converters 22, 24. However, the controller 102 shown in figure 2 and its function can easily be transferred to the second embodiment of the converter arrangement 20 described at the end of the description of figure 1. As described above, in this second embodiment of the converter arrangement 20, the input voltage is applied at that side of the converter arrangement 20 in which the auxiliary converters 26, 28 are arranged and the compensation voltages are added to the first DC bus voltage, i.e., the total input voltage, applied to the electrical converters 22, 24.

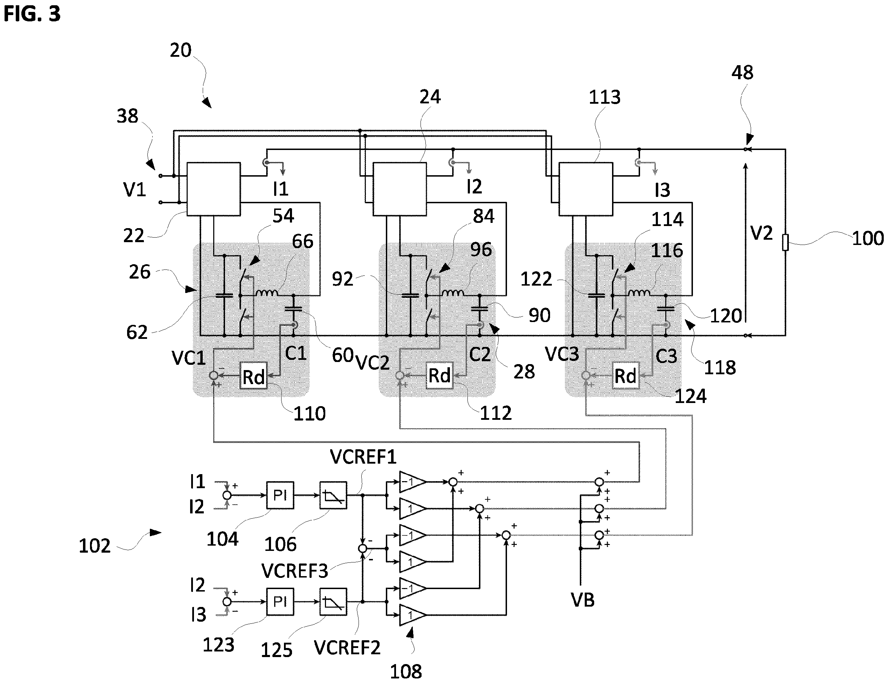

Fig. 3 shows a circuit diagram of a converter arrangement 20 and of a controller 102 for controlling the converter arrangement 20, in accordance with an embodiment of the present invention. The converter arrangement 20 and the controller 102 shown in figure 3 may widely correspond to the converter arrangement 20 described with respect to figures 1 and 2 and, respectively, to the controller 102 described with respect to figure 2. In particular, the first and second electrical converters 22, 24 and the first and second auxiliary voltage sources 26, 28 , as depicted in figure 3, may be identical to the first and second electrical converters 22, 24 and the first and second auxiliary voltage sources 26, 28, respectively, as

EP 4 668 558 A1

depicted in figures 1 and 2. In addition, the controller 102 shown in figure 3 at least in part may correspond to the controller 102 described with respect to figure 2. Therefore, only those features of the converter arrangement 20 and of the controller 102 shown in figure 3 are explained in the following, in which the converter arrangement 20 and the controller 102 of figure 3 differ from the converter arrangement 20 and the controller 102 described with respect to figures 1 and 2.

The converter arrangement 20 may comprise a third electrical converter 113 and a third auxiliary voltage source 118. The third electrical converter 113 may be arranged between the input connection 38 and the output connection 48 electrically in parallel to the first and second electrical converters 22, 24. The third auxiliary voltage source 118 may be electrically arranged in series with the third electrical converter 113, in particular between an output terminal of the third electrical converter 113 and the output connection 48. A structure of the third electrical converter 113 may basically correspond to the structure of the first and second electrical converters 22, 24 described with respect to figure 1. A structure of the third auxiliary voltage source 118 may basically correspond to the structure of the first and second auxiliary voltage sources 26, 28 described with respect to figures 1 and 2. In particular, the third auxiliary voltage source 118 may have a ninth semiconductor arrangement 114, a seventh auxiliary capacitor 120, an eighth auxiliary capacitor 122, and a fifth auxiliary inductance 116. In addition, the third auxiliary voltage source 118 may have another semiconductor arrangement and another auxiliary capacitor being integrated in the third electrical converter 113 and serving as an energy source for being able to apply a third compensation voltage to a third output voltage actually generated by the third electrical converter 113, as explained above in context with the first and second auxiliary voltage sources 26, 28. The eighth auxiliary capacitor 122 may represent a DC link of the third auxiliary voltage source 118.

A third compensation voltage reference value VCREF3 may be determined depending on the first compensation voltage reference value VCREF1 and on the second compensation voltage reference value VCREF2. For example, the third compensation voltage reference value VCREF3 may correspond to a negative sum of the first compensation voltage reference value VCREF 1 and the second compensation voltage reference value VCREF2.

The second compensation voltage reference value VCREF2 may be determined in a similar way as the first compensation voltage reference value VCREF1, e.g., by determining a difference between the second current value I2 and a third current value I3. The third current value 13 represents a third current through the third electrical converter 113 and may be generated by a current sensor (not shown) electrically coupled to the output terminal of the third electrical converter 113. The difference between the second current value I2 and the third current value 13 may be further processed by a second PI controller 123 and by a second lowpass filter 125 to achieve the second compensation voltage reference value VCREF2.

The splitting stage 108 comprises three branches, i.e., a first branch for forwarding the first compensation voltage reference value VCREF1, a second branch for forwarding the second compensation voltage reference value VCREF2, and a third branch for forwarding the third compensation voltage reference value VCREF3. Each of these branches may have two paths, wherein in each of the branches the corresponding compensation voltage reference value VCREF1, VCREF2, VCREF3 is forwarded in one of the corresponding paths with a different sign than in the other one of the corresponding paths.

A general rule for forwarding and combining the compensation voltage reference values VCREF1, VCREF2, VCREF3 may be based on the principle to add two of the compensation voltage reference values VCREF1, VCREF2, VCREF3 generated by the corresponding PI controller 104, 123 that acts on the corresponding current difference to their neighbours. In particular, considering a case with N paralleled electrical converters 22, 24, 113, N currents through the corresponding electrical converters 22, 24, 113 are measured. Then, the differences between these currents and the currents of their neighbours are determined, i.e., the differences $I_{\{diff,k\}} = I_{\{k\}} - I_{\{k+1\}}$, with k being a natural number ranging from 1 to N and with $I_{\{N+1\}} = I_{\{1\}}$ to make this definition cyclic. On each of these differences a corresponding PI controller 103, 123 may act to generate the compensation voltage reference $VCREF_{\{k\}} = PI$ controller($I_{\{diff,k\}}$). Then, when neglecting the active damping described above, the compensation signal $VC_{\{k\}}$ for each auxiliary voltage source 26, 28, 118 may be determined by $VC_{\{k\}} = VCREF_{\{k-1\}} - VCREF_{\{k\}}$, again considering $VCREF_{\{0\}} = VCREF_{\{N\}}$ to make this definition cyclic. Assuming linearity of the PI controllers 103, 123, each compensation signal $VC_{\{k\}}$ depends on the following sum of currents:

$$-2*I_{\{k\}} + I_{\{k-1\}} + I_{\{k+1\}},$$

so its "own" current negative twice and the neighboring currents positive and once, with $I_{\{0\}} = I_{\{N\}}$ and $I_{\{N+1\}} = I_{\{1\}}$ to make it cyclic, as mentioned above.

In particular, the third voltage reference value VCREF3 having a positive sign may be added to the first voltage reference value VCREF1 having a negative sign. The second voltage reference value VCREF2 having a negative sign may be added to the first voltage reference value VCREF1 having a positive sign. The second voltage reference value VCREF2 having a positive sign may be added to the third voltage reference value VCREF3 having a negative sign. Then, the results may be modified by adding the bias voltage value VB to the results and/or by the predetermined feedback gain

11

value Rd, e.g., as explained with respect to figure 2.

In particular, the first compensation voltage value VC1 may correspond to the modified sum of the negative first voltage reference value VCREF 1 and the third voltage reference value VCREF3. The second compensation voltage value VC2 may correspond to the modified sum of the negative second voltage reference value VCREF2 and the first voltage reference value VCREF 1. The third compensation voltage value VC3 may correspond to the modified sum of the negative third voltage reference value VCREF3 and the second voltage reference value VCREF2.

When modifying the sum of the negative third voltage reference value VCREF3 and the second voltage reference value VCREF2 by the predetermined feedback gain Rd to achieve the third compensation voltage value VC3, a third capacitor current value C3 may be determined, e.g. by a corresponding current sensor (not shown). The third capacitor current value C3 may be representative of a third capacitor current through, in other words "in", the third auxiliary capacitor 118. The third capacitor current value C3 may be multiplied by the predetermined feedback gain value Rd, e.g., by a third gain block 124. Then, the result of this multiplication may be subtracted from the sum of the negative third voltage reference value VCREF3, the second voltage reference value VCREF2, and optionally the bias voltage value VB.

A third compensation signal may be generated depending on the third compensation voltage value VC3, e.g., by a third modulator (not shown) of the controller 102, e.g., by a third PWM-modulator, as it is known in the art. The third compensation signal may be used to control one or more semiconductor switches of the third auxiliary voltage source 118, in particular of the semiconductor switches of the ninth semiconductor arrangement 114. The controller 102 may send the third compensation signal to the third auxiliary voltage source 118, wherein the third auxiliary voltage source 118 is configured to add the third compensation voltage corresponding to the third compensation voltage value VC3 to the third output voltage generated by the third electrical converter 113 upon receiving the first compensation signal.

The controller 102 shown in figure 3 and its function are described with respect to an embodiment of the converter arrangement 20 similar to the first embodiment described with respect to figure 1. As described above, in this first embodiment of the converter arrangement 20, the total output voltage is generated at that side of the converter arrangement 20 in which the auxiliary converters 26, 28 are arranged, i.e., the right side of figure 1, and the compensation voltages are added to the output voltages of the electrical converters 22, 24. However, the controller 102 shown in figure 3 and its function can easily be transferred to the second embodiment of the converter arrangement 20 described at the end of the description of figure 1. As described above, in this second embodiment of the converter arrangement 20, the input voltage is applied at that side of the converter arrangement 20 in which the auxiliary converters 26, 28 are arranged and the compensation voltages are added to the first DC bus voltage, i.e., the total input voltage, applied to the electrical converters 22, 24.

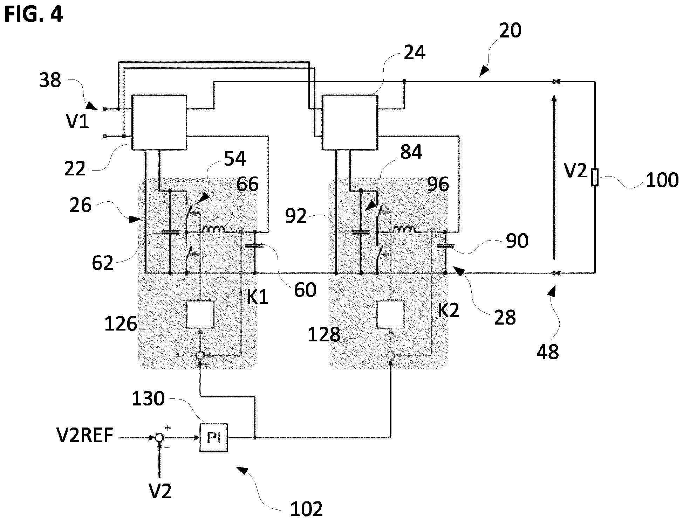

Fig. 4 shows a circuit diagram of a converter arrangement 20 and of a controller 102 for controlling the converter arrangement 20, in accordance with an embodiment of the present invention. The converter arrangement 20 shown in figure 4 may widely or completely correspond to the converter arrangement 20 described with respect to figures 1 and 2. In contrast, the functions of the controller 102 shown figure 4 differ from the functions of the controller 102 described with respect to figure 2. These differing functions of the controller 102 shown in figure 4 may be additional functions of the controller 102 described with respect to figure 2. These additional functions enable the controller 102 not only to balance the currents through the electrical converters 22, 24 but also to regulate the second DC bus voltage to a second DC bus voltage reference value V2REF. The second DC bus voltage reference value V2REF may be provided by an external device, e.g., by the load 100 and/or by a controller for controlling the load 100.

To this end, the controller 102 may receive the second DC bus voltage value V2 corresponding to the actual total output voltage of the converter arrangement 20. The actual output voltage may be measured, e.g., by the voltmeter mentioned above, and may be transferred to the controller 102.

The controller 102 may determine a difference between the second DC bus voltage value V2 and the second DC bus voltage reference value V2REF. The first auxiliary voltage source 26 and the second auxiliary voltage source 28 may be controlled depending on the difference between the second DC bus voltage value V2 and the second DC bus voltage reference value V2REF such that the actual total output voltage corresponds to the second DC bus voltage reference value V2REF to be supplied by the converter arrangement 20 by determining first and second control signals depending on the difference between the second DC bus voltage value V2 and the second DC bus voltage reference value V2REF and by sending the first control signal to the first auxiliary voltage source 26 and by sending the second control signal to the second auxiliary voltage source 28 in addition to the corresponding compensation signals.

For example, the difference between the second DC bus voltage value V2 and the second DC bus voltage reference value V2REF may be further processed by a second PI controller 130 before being fed into a first current controller 126 of the first auxiliary voltage source 26 and a second current controller 128 of the second auxiliary voltage source 28. The first and second current controllers 126, 128 each may be a P controller or a PI controller. The first and second current controllers 126, 128 each may be referred to as inner controller. This scheme may correspond to the so-called "cascaded control loop" with an outer voltage controller, i.e., the second PI controller 130, and an inner current controller, wherein in this case each auxiliary voltage source 26, 28 incorporates its own individual inner current controller, i.e., the first and second current controllers 126, 128. This principle is a widely known concept in power electronics control and therefore not further explained here.

An output of the second PI controller 130 may be interpreted as current reference values, which may be fed into the auxiliary voltage sources 26, 28. Inside each auxiliary voltage source 26, 28, the inner current controllers 126, 128 may contribute to ensure, that an individual output current of the corresponding auxiliary voltage source 26, 28 flowing in the first and, respectively, second auxiliary inductors 66, 96 corresponds to the corresponding current reference value. This may be achieved by measuring inductor currents through the respective auxiliary inductors 66, 96 and by generating corresponding first and second inductor current values K1, K2. Then, the first and second inductor current values K1, K2 may be subtracted from the current reference values and the resulting difference may be fed in the corresponding current controllers 126, 128. Finally, the outputs of the current controllers 126, 128 may be used to generate the first and second control signals, e.g., by corresponding modulators (not shown), e.g., PWM-modulators, as compensatory actions.

So, the converter arrangement 20 according to figure 4 is able to equally distribute the currents of the electrical converters 22, 24 and to regulate the total output voltage of the converter arrangement 20.

The embodiment of the controller 102 shown in figure 4 is described with respect to the converter arrangement 20 comprising the two electrical converters 22, 24, only. However, this concept may be transferred easily to the embodiment of the converter arrangement 20 having the three electrical converters 22, 24, 113 shown in figure 3, or to an embodiment of the converter arrangement 20 having four or more paralleled electrical converters 22, 24, 113. Further, the embodiment of the controller 102 shown in figure 4 is described with respect to the first embodiment of the converter arrangement 20 but may be easily transferred to the second embodiment of the converter arrangement 20.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| | |
|---|---|
| Converter arrangement | 20 |
| First electrical converter | 22 |
| Second electrical converter | 24 |
| First auxiliary voltage source | 26 |
| Second auxiliary voltage source | 28 |
| First semiconductor arrangement | 30 |
| Second semiconductor arrangement | 32 |
| Third semiconductor arrangement | 34 |
| Fourth semiconductor arrangement | 36 |
| Input connection | 38 |
| First converter capacitor | 40 |
| Second converter capacitor | 42 |
| First coupling capacitor | 44 |
| Second coupling capacitor | 46 |
| Output connection | 48 |
| First coupling inductance | 50 |
| Second coupling inductance | 52 |
| Fifth semiconductor arrangement | 54 |
| Sixth semiconductor arrangement | 56 |
| First auxiliary capacitor | 60 |
| Second auxiliary capacitor | 62 |
| Third auxiliary capacitor | 64 |
| First auxiliary inductance | 66 |
| First auxiliary winding | 68 |
| Third converter capacitor | 70 |
| Fourth converter capacitor | 72 |

(continued)

| | |
|---|---|
| Third coupling capacitor | 74 |
| Fourth coupling capacitor | 76 |
| Third coupling inductance | 80 |
| Fourth coupling inductance | 82 |
| Seventh semiconductor arrangement | 84 |
| Eighth semiconductor arrangement | 86 |
| Fourth auxiliary capacitor | 90 |
| Fifth auxiliary capacitor | 92 |
| Sixth auxiliary capacitor | 94 |
| Second auxiliary inductance | 96 |
| Second auxiliary winding | 98 |
| Load | 100 |
| Controller | 102 |
| First PI controller | 104 |
| First lowpass filter | 106 |
| Splitting stage | 108 |
| First gain block | 110 |
| Second gain block | 112 |
| Third electrical converter | 113 |
| Ninth semiconductor arrangement | 114 |
| Fifth auxiliary inductance | 116 |
| Third auxiliary voltage source | 118 |
| Seventh auxiliary capacitor | 120 |
| Eighth auxiliary capacitor | 122 |
| Second PI controller | 123 |
| Third gain block | 124 |
| Second lowpass filter | 125 |
| First current controller | 126 |
| Second current controller | 128 |
| Second PI controller | 130 |
| First DC bus voltage value | V1 |
| Second DC bus voltage value | V2 |
| Second DC bus voltage reference value | V2REF |
| Bias voltage value | VB |
| First compensation voltage value | VC1 |
| Second compensation voltage value | VC2 |
| Third compensation voltage value | VC3 |
| First compensation voltage reference value | VCREF1 |
| Second compensation voltage reference value | VCREF2 |
| Third compensation voltage reference value | VCREF3 |
| First current value | I1 |
| Second current value | I2 |
| First capacitor current value | C1 |
| Second capacitor current value | C2 |
| Third capacitor current value | C3 |
| First inductor current value | K1 |
| Second inductor current value | K2 |
| Feedback gain value | Rd |

**Claims**

1. Method for operating a converter arrangement (20), the converter arrangement (20) being configured for converting a first DC bus voltage into a second DC bus voltage and comprising a first electrical converter (22), a second electrical converter (24) being electrically arranged in parallel to the first electrical converter (22), and a first auxiliary voltage source (26) electrically arranged in series with the first electrical converter (22), the method comprising:

   receiving a first current value (I1) being representative of a first current through the first electrical converter (22);
   receiving a second current value (I2) being representative of a second current through the second electrical converter (24);
   determining a difference between the first and second current values (I1, I2);
   determining a first compensation voltage value (VC1) depending on the difference such that the first current corresponds to the second current when a first compensation voltage corresponding to the first compensation voltage value (VC1) is added to the first DC bus voltage applied to the first electrical converter (22) or when the first compensation voltage is added to a first output voltage generated by the first electrical converter (22); and
   sending a first compensation signal to the first auxiliary voltage source (26), wherein the first auxiliary voltage source (26) is configured to add the first compensation voltage to the first DC bus voltage applied to the first electrical converter (22) or, respectively, to the first output voltage generated by the first electrical converter (22) upon receiving the first compensation signal.

2. Method in accordance with claim 1, wherein
   the first compensation voltage value (VC1) is determined depending on the difference by determining a first compensation voltage reference value (VCREF1) depending on the difference and by adding a predetermined bias voltage value (VB) to the first compensation voltage reference value (VCREF 1).

3. Method in accordance with claim 1, wherein
   the first compensation voltage value (VC1) is determined depending on a predetermined feedback gain value (Rd) and depending on the difference by determining a first compensation voltage reference value (VCREF1) depending on the difference and by modifying the determined compensation voltage reference value (VCREF1) by the predetermined feedback gain value (Rd).

4. Method in accordance with claim 1, wherein
   the first compensation voltage value (VC1) is determined depending on the difference by determining a first compensation voltage reference value (VCREF1) depending on the difference, by adding a predetermined bias voltage value (VB) to the first compensation voltage reference value (VCREF1), and by modifying the resulting sum by a predetermined feedback gain value (Rd).

5. Method in accordance with one of the preceding claims, wherein the converter arrangement (20) comprises a second auxiliary voltage source (28) electrically arranged in series with the second electrical converter (24), the method comprising:

   determining a second compensation voltage value (VC2) depending on the difference such that the first current corresponds to the second current when a second compensation voltage corresponding to the second compensation voltage value (VC2) is added to the first DC bus voltage applied to the second electrical converter (24) or when the second compensation voltage is added to a second output voltage generated by the second electrical converter (24); and
   sending a second compensation signal to the second auxiliary voltage source (28), wherein the second auxiliary voltage source (28) is configured to add the second compensation voltage to the first DC bus voltage applied to the second electrical converter (22) or, respectively, to the second output voltage generated by the second electrical converter (24) upon receiving the second compensation signal.

6. Method in accordance with claim 5, comprising:

   receiving a second DC bus voltage value (V2) corresponding to an actual second DC bus voltage actually generated by the converter arrangement (20);
   determining a difference between the second DC bus voltage value (V2) and a second DC bus voltage reference value (V2REF), wherein the second DC bus voltage reference value (V2REF) corresponds to the second DC voltage to be generated by the converter arrangement (20); and

controlling the first auxiliary voltage source (26) and the second auxiliary voltage source (28) depending on the difference between the second DC bus voltage value (V2) and the second DC bus voltage reference value (V2REF) such that the actual second DC bus voltage corresponds to the second DC bus voltage reference value (V2REF).

7. Controller (102) for operating a converter arrangement (20), the controller (102) comprising:

a memory for storing one or more current values and/or one or more voltage values; and
a processor communicatively coupled to the memory and being configured for carrying out the method in accordance with one of the preceding claims based on the one or more current values and/or one or more voltage values, respectively.

8. Converter arrangement (20) for converting a first DC bus voltage into a second DC bus voltage, the converter arrangement (20) comprising:

an input connection (38) for electrically coupling the converter arrangement (20) to an energy source, wherein the energy source is configured for providing the first DC bus voltage;
an output connection (48) for electrically coupling the converter arrangement (20) to a load (100), wherein the load (100) is configured for receiving the second DC bus voltage;
a first electrical converter (22) electrically coupled in between the input connection (38) and the output connection (48) and being configured for receiving the first DC bus voltage, for converting the first DC bus voltage into the second DC bus voltage and for applying the second DC bus voltage to the output connection (48);
a second electrical converter (24) electrically coupled in between the input connection (38) and the output connection (48) such that the first electrical converter (22) and the second electrical converter (24) are electrically arranged in parallel between the input connection (38) and the output connection (48), wherein the second electrical converter (24) is configured for receiving the first DC bus voltage, for converting the first DC bus voltage into the second DC bus voltage and for applying the second DC bus voltage to the output connection (48); and
a first auxiliary voltage source (26) electrically coupled in series between the first electrical converter (22) and the input connection (38) or between the first electrical converter (22) and the output connection (48), with the first auxiliary voltage source (26) being configured for adding a first compensation voltage to the first DC bus voltage applied to the first electrical converter (22) or, respectively, to a first output voltage generated by the first electrical converter (22), wherein the first compensation voltage is generated such that a first current through the first electrical converter (22) corresponds to a second current through the second electrical converter (24).

9. Converter arrangement (20) in accordance with claim 8, wherein
a first auxiliary winding (68) of the first auxiliary voltage source (26) is inductively coupled to a coupling inductance (50, 52) of the first electrical converter (22) for receiving energy from the first electrical converter (22) for providing the first compensation voltage.

10. Converter arrangement (20) in accordance with one of claims 8 or 9, comprising:
a second auxiliary voltage source (28) electrically coupled in series between the second electrical converter (24) and the input connection (38) or between the second electrical converter (24) and the output connection (48), with the second auxiliary voltage source (28) being configured for adding a second compensation voltage to the first DC bus voltage applied to the second electrical converter (24) or, respectively, to a second output voltage generated by the second electrical converter (24), wherein the second compensation voltage is generated such that the first current through the first electrical converter (22) corresponds to the second current through the second electrical converter (24).

11. Computer program for operating a converter arrangement (20) according to one of claims 8 to 10, the computer program comprising computer-readable instructions which, when being executed by a processor of a controller according to claim 7, carry out the method in accordance with one of claims 1 to 6.

12. Computer-readable medium on which a computer program according to claim 11 is stored.

**FIG. 1**

**FIG. 2**

**FIG. 3**

FIG. 4

## EUROPEAN SEARCH REPORT

**Application Number**

EP 24 18 2607

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 114 744 879 A (HUNAN INST ENGINEERING) 12 July 2022 (2022-07-12) * and the corresponding parts of the description; figure 1 * ----- | 1-12 | INV. H02M1/00 H02M3/00 H02M3/28 H02M3/335 |
| Y | CN 114 421 779 A (XISAN PITCH ELECTRICAL TECH CO LTD) 29 April 2022 (2022-04-29) * and the corresponding parts of the description; figure 3 * ----- | 1-12 | |

**TECHNICAL FIELDS SEARCHED (IPC)**

H02M

The present search report has been drawn up for all claims

| Place of search | Date of completion of the search | Examiner |
|---|---|---|
| Munich | 6 December 2024 | Kruip, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 2607

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2024

| Patent document cited in search report | Publication date | Patent family member(s) | Publication date |
|---|---|---|---|
| CN 114744879 A | 12-07-2022 | NONE | |
| CN 114421779 A | 29-04-2022 | NONE | |

EPO FORM P0459

For more details about this annex : see Official Journal of the European Patent Office, No. 12/82